# EUROPÄISCHE PATENTSCHRIFT

(11) **EP 3 826 801 B1**
(45) Veröffentlichungstag und Bekanntmachung des Hinweises auf die Patenterteilung: **23.08.2023**
(21) Anmeldenummer: 19736634.7
(22) Anmeldetag: 28.06.2019
(51) Int. Cl.: B23K 26/38, B32B 3/02, E04F 15/02, E04F 15/10, B23K 103/16, B23K 103/00

(54) **FUSSBODENZUSCHNITT UND VERFAHREN ZU DESSEN HERSTELLUNG**
FLOORING BLANK AND METHOD FOR PRODUCTION THEREOF
DÉCOUPE DE PLANCHER ET SON PROCÉDÉ DE FABRICATION

(30) Priorität: 23.07.2018 DE 102018117755
(43) Veröffentlichungstag der Anmeldung: 02.06.2021
(73) Patentinhaber: Windmöller GmbH, 32832 Augustdorf (DE)
(72) Erfinder: WINDMÖLLER, Ulrich, 33758 Schloß Holte-Stukenbrock (DE)
(74) Vertreter: Wagner Albiger & Partner Patentanwälte mbB
(86) Internationale Anmeldenummer: PCT/EP2019/067394
(87) Internationale Veröffentlichungsnummer: WO 2020/020574

(56) Entgegenhaltungen:
- US-A- 4 469 931
- US-A1- 2003 218 278
- US-A1- 2011 200 750
- US-A1- 2014 054 275
- V. G. BARNEKOV ET AL: "FACTORS INFLUENCING LASER CUTTING OF WOOD", FOREST PRODUCTS JOURNAL, MADOSON, WI, US, Bd. 36, Nr. 1, 1. Januar 1986 (1986-01-01) , Seiten 55-58, XP000198770, ISSN: 0015-7473

## Beschreibung

Die Erfindung betrifft einen Fußbodenzuschnitt entsprechend dem Oberbegriff des Anspruchs 1 (siehe z.B. US 2011/200750 A1), und ein Verfahren zum Herstellen von solchen Fußbodenzuschnitten aus einer Fußbodenbahn. Fußbodenzuschnitte werden beispielsweise als Klebeware eingesetzt, die auf einen Unterboden verklebt werden, um somit einen Fußbodenbelag zu schaffen.

Aus dem Stand der Technik ist bekannt, zu Herstellung der Fußbodenzuschnitte eine größere, rechteckige Fußbodenbahn zu verwenden und diese in mehrere rechteckige Fußbodenzuschnitte zu schneiden, wobei an den Fußbodenzuschnitten jeweils entsprechende Kanten bzw. Schnittkanten entstehen. Weiter ist bekannt, an diesen Schnittkanten durch Fräsen oder andere Bearbeitungsschritte eine profilierte Kontur herzustellen, wobei die Kontur an einem oberen Bereich der Kante eine Fase oder Abrundung aufweist und an einem unteren Bereich einen Hinterschnitt ausbildet. Beispielsweise ist aus der DE 10 2005 063 034 B4 ein Fußbodenpaneel bekannt, dessen Kanten mit einer profilierten Kontur versehen sind. Hier wird die profilierte Kontur verwendet, eine verriegelbare Nut-Feder-Verbindung zwischen zwei aneinander liegenden Fußbodenpaneelen herzustellen, damit diese in einer vertikalen Richtung und in einer horizontalen Richtung verriegelt werden können. Dadurch ist eine schwimmende Verlegung der Fußbodenpaneele möglich. Üblicherweise werden solche Profile gefräst. Beim Zuschneiden der Fußbodenzuschnitte aus der Fußbodenbahn werden Sägen eingesetzt, was ebenfalls zu entsorgende Späne entstehen lässt und mit einem entsprechenden Materialverlust verbunden ist.

Auch werden zum Zuschneiden Stanzwerkzeuge eingesetzt. Auch diese unterliegen wie die spanabhebenden Werkzeuge einem Werkzeugverschleiß.

Aus der DE 10 2005 063 034 B4 ist ebenfalls bekannt, ein Laserwerkzeug bei der Herstellung der profilierten Kante zu verwenden. Hier wird lediglich die Fase an dem oberen Bereich der Kante mit dem Laserwerkzeug erzeugt.

Weiterhin bietet der Fachartikel "Factors influencing laser cutting of wood" von V. G. Barnekov et al. einen Überblick über Einflussfaktoren bei Laserschneidverfahren von Holz. Als einer der wichtigen Einflussfaktoren wird der Fokuspunkt des Lasers erörtert. Die Analyse des Laserstrahlengangs veranschaulicht, wie verschiedene Abstände zwischen Linse und Werkstück einen Einfluss auf die Lagen des Fokuspunkts haben. Es wird beschrieben, dass die Lage des Fokuspunkts für die Schneideffizienz eine wesentliche Rolle spielt.

Die US 2014/054275 A1 offenbart eine Technologie zur Herstellung von einem Schneidwerkzeugen. Dabei wird ein vordefiniertes Profil des Schneidwerkzeugs mittels eines Lasers eingestellt. Durch einen Laserstrahl wird eine abgerundete Kante auf der Seite des Werkzeugs ausgebildet, auf der der Laserstrahl eintritt. Andererseits ist auf einer Seite des Werkzeugs, auf der der Laserstrahl austritt, eine scharfe Kante ausgebildet.

Die US 2003/218278 A1 offenbart ein Verfahren zur Unterteilung von Mehrschichtfilme und Laminatkörper mittels Laserstrahlung. Dabei werden Schnittlinien in die die Laminatkörper geschnitten, so dass der Laminatkörper in mehrere diskrete Stücke unterteilt vorliegt. Es ist dabei vorgesehen, dass die Schnittlinie eine zur Oberfläche des Laminatkörpers gerichtete abgerundete Kante aufweist.

Die US 4 469 931 A offenbart ein Verfahren zum Schneiden von Holz oder Plastik, um Abplatzungen oder Span zu eliminieren. Dabei wird zunächst eine Kerbe mittels einer Laserstrahlung in die Materialoberfläche geschnitten. Anschließend wird das Material mittels einer Säge entlang der durch die Laserstrahlung eingestellten Kerbe geschnitten. Durch die zuvor mittels Laser eingebrannte Kerbe wird die Bildung von Span beim anschließenden Sägeverfahren verringert.

Auch für Fußbodenzuschnitte, die nicht schwimmend verlegt werden, sondern auf einen Unterboden aufgeklebt werden, ist es bekannt, eine profilierte Kontur an der Kante bzw. den Kanten der Fußbodenzuschnitte vorzusehen. Die profilierte Kontur dient hier dazu, dass benachbarte Fußbodenzuschnitte spaltfrei anliegen können, auch wenn der Unterboden gewisse Unebenheiten aufweist. Durch die Fase werden scharfe überstehende Kanten vermieden. Auch verleiht die Fase den Fußbodenzuschnitten ein natürliches Aussehen.

Das Zuschneiden in mehrere Fußbodenzuschnitte und das danach erfolgte Herstellen der profilierten Kontur ist mit einem gewissen Fertigungsaufwand verbunden. Der Erfindung liegt daher die Aufgabe zu Grunde, einen Fußbodenzuschnitt bereitzustellen, der wenigstens eine profilierte Kante aufweist und einfach herzustellen ist.

Die der Erfindung zu Grunde liegende Aufgabe wird mit einem Fußbodenzuschnitt und ein Verfahren zum Bereitstellen von solchen Fußbodenzuschnitten aus einer Fußbodenbahn gemäß Ansprüchen 1 und 2 gelöst.

Ausführungsbeispiele des erfindungsgemäßen Verfahrens können den Unteransprüchen zu Anspruch 2 entnommen werden.

Der erfindungsgemäße Fußbodenzuschnitt weist einen mehrschichtigen Aufbau auf, der eine Nutzschicht aus einem transparenten Kunststoff, eine Dekorschicht, eine Verstärkungsschicht und eine Trägerschicht aufweist, sowie mit wenigstens einer Kante, die sich von einer Nutzoberfläche bis zu einem Rücken des Fußbodenzuschnitts erstreckt und an der eine profilierte Kontur vorgesehen ist. Die profilierte Kontur weist eine Abrundung oder Fase in einem oberen Bereich bzw. im Bereich der Nutzoberfläche auf. Die profilierte Kontur bildet in einem unteren Bereich des Fußbodenzuschnitts einen Hinterschnitt aus. Die profilierte Kontur ist vollständig durch ein Laserwerkzeug mit einer Schneiddüse hergestellt, deren Längsachse bei Herstellung der profilierten Kontur senkrecht zu der Nutzoberfläche ausgerichtet ist.

Als Kunststoff für die Nutzschicht kommen bevorzugt duroplastische Kunststoffe wie Polyurethan in Frage. Grundsätzlich kommen auch thermoplastische Kunststoffe wie PVC, PP, PE oder PET in Frage. Als Material für die Trägerschicht können ebenfalls Kunststoffe wie PU oder PVC verwendet werden. Erfindungsgemäß geht die Fase oder Abrundung der Kante in eine konvex ausgebildete Anlagewölbung über. Bei Fußbodenzuschnitten mit jeweils gleicher (Schnitt-) Kante kommen die jeweiligen Anlagewölbungen der sich gegenüberstehenden Kanten zur Anlage. Die konvex ausgebildete Anlagewölbung kann in Höhe der Verstärkungsschicht vorgesehen sein. Im Querschnitt kann die Fase oder Abrundung in etwa der Form eines Viertelkreises entsprechen. Ein Radius dieses Viertelkreises kann dabei 50 bis 700 µm betragen. Vorzugsweise entspricht der Radius des Viertelkreises in etwa der Dicke der Nutzschicht.

Der Anlagewölbung schließt sich ein geneigter, im Wesentlichen geradliniger Konturabschnitt an. Dieser geradlinige Konturabschnitt befindet sich in einem mittleren bis unteren Bereich der Kante. Ein Neigungswinkel zu einer Haupterstreckung der der Kante, welche senkrecht zur Nutzoberfläche verläuft, beträgt in einem Ausführungsbeispiel 2 bis 10°, vorzugsweise 4 bis 8°.

Das erfindungsgemäße Verfahren sieht vor, dass für das Zuschneiden der Fußbodenbahn in die Fußbodenzuschnitte das Laserwerkzeug, vorzugsweise ein CO₂-Laser, verwendet wird, durch das beim Zuschneiden in einem Arbeitsgang die profilierte Kontur hergestellt wird. Während bei den aus dem Stand der Technik bekannten Herstellverfahren das Zuschneiden der Fußbodenzuschnitte und das Herstellen der profilierten Kontur zwei getrennte Arbeitsschritte bedeutet, wird erfindungsgemäß nur ein einzelner Arbeitsgang benötigt, um die Fußbodenbahn aufzuteilen in die Fußbodenzuschnitte und die profilierte Kontur herzustellen. Vorzugsweise ist eine Nachbearbeitung oder das Anbringen von Unterkonturen an der profilierten Kontur nach diesem zusammengefassten Arbeitsgang nicht mehr notwendig. Der Begriff "Zuschneiden" ist allgemein als Zerteilen der Fußbodenbahn in die Fußbodenzuschnitte zu verstehen.

Bei der Durchführung des erfindungsgemäßen Verfahrens findet zudem kein Werkzeugverschleiß statt. Entsprechend können Rüstzeiten zum Tausch von Werkzeugen vermieden werden.

Das Laserwerkzeug kann einen bewegbaren Laserschneidkopf aufweisen, der einer vorbestimmten Schnittlinie folgt (Plotteranlage). Dabei kann die Fußbodenbahn feststehen und die Laserschnittgeschwindigkeit entspricht der Geschwindigkeit des Laserschneidkopfes. Durch den bewegbaren Laserschneidkopf lassen sich auch kurven- oder bogenförmige Kanten erzeugen. Vorzugsweise werden aber mit dem erfindungsgemäßen Verfahren rechteckige Fußbodenzuschnitte hergestellt, wobei bevorzugt zwei Längskanten die profilierte Kontur aufweisen. Die zu den Längskanten senkrechten Querkanten können ebenfalls eine durch das Laserwerkzeug erzeugte profilierte Kontur aufweisen.

Das Zuschneiden der Fußbodenbahn in die Fußbodenzuschnitte kann auch durch mehrere feststehende Laserschneidköpfe des Laserwerkzeugs erfolgen, wobei eine Laserschnittgeschwindigkeit beim Zuschneiden einer Transportgeschwindigkeit der Fußbodenbahn entspricht. Vorzugsweise ist dabei der Laserschneidkopf bzw. eine Schneiddüse des Laserschneidkopfes vertikal nach unten gerichtet, während der Transport der Fußbodenbahn in einer horizontalen Richtung stattfindet.

Die Laserschnittgeschwindigkeit, also die Relativgeschwindigkeit zwischen Laserschneidkopf und Fußbodenbahn, kann 5 bis 25 m pro Minute betragen. Bei einer Dicke der Fußbodenbahn von 2 bis 3 mm ist es beispielsweise bei einer Leistungsaufnahme des Laserschneidkopfes von 500 W möglich, eine Laserschnittgeschwindigkeit von 5 bis 10 m pro Minute zu erzielen. Bei einer Leistungsaufnahme von 1000 W sind Laserschnittgeschwindigkeiten von 10 bis 25 m pro Minute möglich. Liegt die Leistungsaufnahme noch höher, können auch Werte über 25 m pro Minute erreicht werden.

Die Laserschneidköpfe können nebeneinander auf einem Trägerbalken angeordnet sein, der sich vorzugsweise quer zur Transportrichtung der Fußbodenbahn erstreckt.

Legt man beispielsweise eine Fußbodenbahn zu Grunde, die eine Bahnbreite B von ca. 2 m und eine Bahnlänge L von 130 cm aufweist, wobei die Fußbodenbahn längs ihrer Bahnlänge L dem Laserwerkzeug zugeführt wird (Transportrichtung parallel zu Bahnlänge L), so lassen sich in einem Arbeitsgang zehn Fußbodenzuschnitte jeweils mit einer Breite von ca. 20 cm und einer Länge L von 130 cm erzeugen, wenn elf feststehende Laserschneidköpfe nebeneinander für elf Längsschnitte angeordnet sind. Alle Fußbodenzuschnitte, auch die am Rand befindlichen Fußbodenzuschnitte, weisen dann zwei profilierte Längskanten auf. Jedoch fallen auch zwei schmale Randabfallstreifen an.

Es hat sich als kostengünstig erwiesen, mehrere Laserschneidköpfe einer Energiequelle zuzuordnen. Beispielsweise lassen sich drei Laserschneidköpfe mit einer bevorzugten Leistungsaufnahme von jeweils 300 bis 800 W durch eine Energiequelle mit einer Leistung von 2500 W versorgen. Bei beispielsweise elf Laserschneidköpfen würden dann vier Energiequellen mit jeweils 2500 W ausreichen.

In einem Ausführungsbeispiel stellt die Fußbodenbahn eine Endlosbahn dar. Bei dieser Endlosbahn kann es sich beispielsweise um eine aufgewickelte Endlosbahn in Form einer Rolle handeln. Auch ist es möglich, dass die Herstellung der Fußbodenbahn bzw. der Endlosbahn unmittelbar vor dem Zuschneiden der Fußbodenbahn in die Fußbodenzuschnitte erfolgt, sodass ein zwischenzeitliches Aufrollen oder eine andere Art der Vorratshaltung der Endlosbahn entfällt.

Wenn die Fußbodenbahn eine Endlosbahn ist, sind zur Erzeugung der Fußbodenzuschnitte mit endlicher Länge quer zur Transportrichtung der Endlosbahn verlaufende Schnitte notwendig, welche grundsätzlich ebenfalls durch das Laserwerkzeug erfolgen können. Das Laserwerkzeug kann dazu zusätzliche Laserschneidköpfe aufweisen. Vorzugsweise werden die quer verlaufende Schnitte durch ein Fallbeil oder Guillotine bewerkstelligt, das sich vorzugsweise über die ganze Breite der Endlosbahn erstreckt. Die quer verlaufenden Schnitte können vor oder nach den Längsschnitten stattfinden.

Die Fußbodenbahn kann mehrschichtig aufgebaut sein, wobei zu dessen Herstellung auf eine Releaseschicht ein flüssiges Polyurethan-Material zur Bildung einer transparenten Nutzschicht, zur Bildung einer Dekorschicht ein Dekorbogen (der auch eine Dekor-Endlosbahn einschließen soll) und zur Bildung einer Verstärkungsschicht ein Verstärkungsmaterial aufgetragen werden kann. Zur Bildung einer Trägerschicht kann ein weiterer Kunststoff, vorzugsweise ebenfalls ein Polyurethan-Material, aufgetragen werden. Das Polyurethan-Material für die Trägerschicht kann Füllstoffe umfassen.

Nach erfolgter Herstellung der Fußbodenbahn wird die Releaseschicht wieder von den übrigen Schichten getrennt, sodass sich ein folgender Schichtaufbau ergibt: transparente Nutzschicht, Dekorschicht, Verstärkungsschicht, Trägerschicht. Die Releaseschicht kann eine geprägte Oberfläche mit Erhebungen und/oder Vertiefungen aufweisen. Dadurch erfährt die transparente Nutzschicht eine entsprechende Oberflächenprägung.

Vorzugsweise ist das Polyurethan-Material für die transparente Nutzschicht aus aliphatischen Polyurethan-Komponenten zusammengesetzt. Das Polyurethan-Material für die Trägerschicht ist vorzugsweise aus aromatischen Polyurethan-Komponenten zusammengesetzt. In einem Ausführungsbeispiel ist der Dekorbogen ein Dekorpapier auf Zellstoffbasis. Der Dekorbogen kann auch eine Dekorfolie aus Kunststoff sein, beispielsweise aus PP, PE oder PET. Das Flächengewicht des Dekorpapiers bzw. der Dekorfolie kann dabei 20 bis 100 g/m² betragen.

Das Verstärkungsmaterial kann eine Glasfasermatte umfassen. Es kann sich beispielsweise um ein Glasfaservlies, ein Glasfasergelege oder eine Glasfasergewebe handeln.

Das Polyurethan-Material für die Trägerschicht kann organische oder anorganische Füllstoffe enthalten. In Betracht kommen Sand, Kreide, Ton, Mineralien oder Glas als anorganische Füllstoffe. Holz, Kork, Lignin, Pflanzenfasern können als organische Füllstoffe oder auch Polystyrol oder Granulate als polymere Füllstoffe eingesetzt werden.

Auf einer Rückseite des Dekorbogens kann ein flüssiger Papierverfestiger aufgetragen werden. Bei dem Papierverfestiger kann es sich um eine PU-Rezeptur handeln, die vorzugsweise halogenfrei ist. Der Papierverfestiger kann ein Flammschutzmittel beinhalten. Vorzugsweise weist das Flammschutzmittel einen mineralischen Anteil auf.

Vor dem Auftragen des Papierverfestigers auf die Rückseite des Dekorbogens kann das Verstärkungsmaterial auf den Dekorbogen aufgetragen werden. Der flüssige Papierverfestiger dringt in die Glasfasermatte ein und gelangt dann in den Dekorbogen, wodurch eine entsprechende Imprägnierung von Dekorbogen und Glasfasermatte erfolgt.

Anhand des in der Zeichnung dargestellten Ausführungsbeispiels wird die Erfindung näher erläutert. Es zeigen:
- Figur 1: schematisch in perspektivischer Ansicht ein Fußbodenzuschnitt;
- Figur 2: einen Schnitt entlang der Schnittlinie II-II der Figur 1; und
- Figur 3: schematisch zwei Fußbodenzuschnitte, die mittels einer Schneiddüse eines Laserwerkzeugs geschnitten wurden.

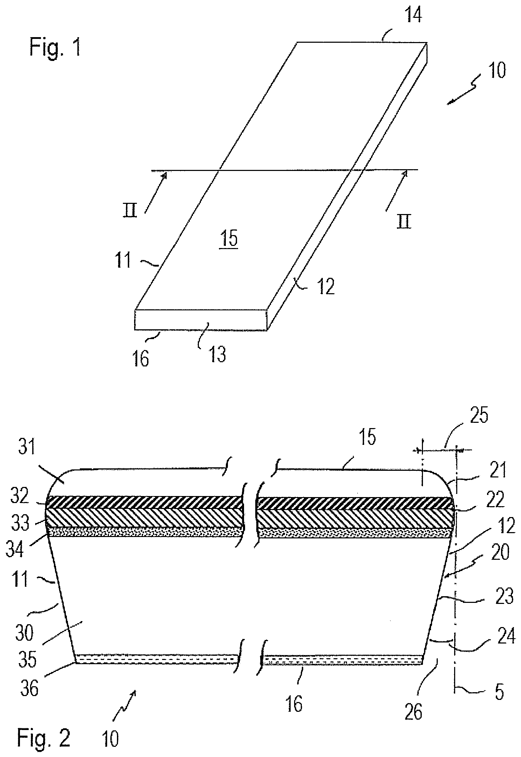

Figur 1 zeigt in perspektivische Ansicht ein Fußbodenzuschnitt 10. Es handelt sich um ein rechteckigen Fußbodenzuschnitt mit zwei parallelen Längskanten 11, 12 sowie zwei dazu senkrecht verlaufende Querkanten 13, 14. Eine Nutzoberfläche des Fußbodenzuschnitts ist mit 15, eine Unterseite oder ein Rücken ist mit 16 bezeichnet.

Die Länge des Fußbodenzuschnitts (entspricht der Länge der Längskanten 11, 12) kann, wenn es sich um eine Fliese handeln soll, beispielsweise 50 cm bis 150 cm betragen. Der Fußbodenzuschnitt als Paneel kann eine Länge von 90 bis 200 cm aufweisen. Eine Breite des Fußbodenzuschnitts 10 bei einer Fliese kann 25 bis 100 cm, bei einem Paneel 15 bis 25 cm betragen (die Breite entspricht der Länge der Querkanten 13, 14). Figur 1 zeigt den Fußbodenzuschnitt 10 nur schematisch: Die Kanten 12, 13 sind vereinfacht als ebene Flächen dargestellt. Figur 2 zeigt einen Querschnitt des in Figur 1 dargestellten Fußbodenzuschnitts 10 entlang der Schnittlinie II-II. Die Längskanten 11, 12 weisen jeweils eine profilierte Kontur 20 auf, wobei die profilierte Kontur 20 der Längskante 12 spiegelsymmetrisch zu der profilierten Kontur der Kante 11 ist. Die Ausführungen zu der profilierten Kontur 20 der Längskante 12 gelten somit sinngemäß auch die profilierte Kontur der Längskante 11.

Die profilierte Kontur 20 weist, entsprechend der Erfindung, in einem oberen Bereich des Fußbodenzuschnitts 10 eine Fase oder Abrundung 21 in Form eines Viertelkreises auf, die in eine konvexe Anlagewölbung 22 übergeht. Der Anlagewölbung 22 schließt sich ein im Wesentlichen geradliniger Konturabschnitt 23 an, der sich bis zu der Unterseite 16 des Fußbodenzuschnitts 10 erstreckt. Ein Neigungswinkel zwischen einer Haupterstreckung der Kante 12 (siehe strickpunktierte Linie 5) und dem Konturabschnitt 23 ist mit 24 bezeichnet und beträgt 6 bis 8°. Es sei darauf hingewiesen, dass Figur 2 den Querschnitt des Flächenzuschnitts 10 nur schematisch darstellt, sodass Winkel, Maße, Dicken etc. nicht maßstabsgetreu dargestellt sind.

Aus Figur 2 geht auch der mehrschichtige Aufbau 30 des Fußbodenzuschnitts 10 hervor. Der Aufbau weist eine transparente und möglicherweise geprägte Nutzschicht 31 aus einem Polyurethan-Material mit aliphatischen Polyurethan-Komponenten auf. Von oben ausgesehen folgt der Nutzschicht 31 eine Dekorschicht 32, die hauptsächlich durch einen Dekorbogen aus Dekorpapier auf Zellstoffbasis gebildet wird. Unterhalb der Dekorschicht 32 ist eine Verstärkungsschicht 33 mit einer Glasfasermatte vorgesehen. Unterhalb der Verstärkungsschicht 33 ist eine Schicht 34 angedeutet, die stellvertretend für einen Papierverfestiger in Form einer flüssigen Polyurethan-Rezeptur stehen soll. Die PU-Rezeptur weist ein Flammschutzmittel mit einem mineralischen Anteil auf.

Bei einer bevorzugten Herstellung des mehrschichten Aufbaus bzw. Schichtaufbaus 30 des Fußbodenzuschnitts 10 wird zunächst zur Ausbildung der Nutzschicht 31 das aliphatische Polyurethan-Material auf eine horizontal sich erstreckende Releaseschicht (nicht dargestellt) aufgetragen. Das bedeutet, dass bei der Herstellung des Schichtaufbaus 30 die Nutzschicht 31 die unterste Schicht darstellt, auf die die anderen Schichten aufgebracht werden.

Auf dieses Polyurethan-Material wird dann von oben zur Ausbildung der Dekorschicht 32 der Dekorbogen und dann die Glasfasermatte gelegt. Es folgt nun der Auftrag der flüssigen PU-Rezeptur auf die Glasfasermatte, wobei die PU-Rezeptur die Glasfasermatte durchdringt und somit auch den Dekorbogen imprägniert. Das Polyurethan-Material für die Nutzschicht dringt ebenfalls in den Dekorbogen ein, sodass auch von dieser Seite eine Imprägnierung des Dekorbogens und ggf. der Glasfasermatte erfolgt. Die Darstellung des Papierverfestigers 34 unterhalb der Dekorschicht 32 soll verdeutlichen, dass bei der bevorzugten Herstellung des Schichtaufbaus 30, wobei hier gedanklich der in Figur 2 dargestellte Schichtaufbau auf dem Kopf gestellt werden muss, der Papierverfestiger auf die Glasfasermatte aufgegeben wird. Auf den Papierverfestiger 34 wird dann ein hochgefülltes Polyurethan-Material, auf das schließlich ein Polyestervlies 36 gelegt wird. Durch Wärmeeintrag härten die aufgetragenen flüssigen Materialen aus. Vorzugsweise wird Wärme ausschließlich von unten, also durch die Releaseschicht, in den Schichtaufbau 30 eingetragen. Wärme kann auch von oben, beispielsweise durch IR-Strahler, in den Schichtaufbau 30 eingebracht werden.

Eine bevorzugte Dicke des Fußbodenzuschnitts 10, auch unabhängig von dem spezifischen Schichtaufbau, beträgt 2 bis 5 mm. Die Dicke der Nutzschicht 31 kann 50 bis 500 µm betragen.

Die Dicke der Dekorschicht 32, der Verstärkungsschicht 33 und des Papierverfestigers 34 kann zusammen 50 bis 350 µm betragen. Ein überwiegender Teil der Dicke des Fußbodenzuschnitts 10 entfällt auf die Trägerschicht 35, die beispielsweise 1 bis 5 mm betragen kann.

Die konvexe Anlagewölbung 22 liegt auf einer Höhe des Schichtaufbaus 30, in der die Verstärkungsschicht 33 bzw. die Dekorschicht 32 angeordnet ist. Der geradlinige Konturabschnitt 23 erstreckt sich praktisch über die gesamte Höhe der Trägerschicht 35. Eine horizontale Ausdehnung 25 der Fase oder Abrundung 21 entspricht in etwa der Dicke der Nutzschicht 31, beispielsweise 250 bis 350 µm. Die horizontale Ausdehnung 25 bezieht sich dabei auf eine vertikal verlaufende Tangente (siehe strickpunktierte Linie 5), die an der konvexen Anlagewölbung 22 angelegt ist. Wenn die Fase oder Abrundung als Viertelkreis ausgebildet ist, kann dessen Radius in etwa 250 bis 350 µm betragen. Durch die konvexe Anlagewölbung 22 und dem nach innen gezogenen Konturabschnitt 23 ergibt sich ein Hinterschnitt 26, der durch den Konturabschnitt 23 und die strickpunktierte Linie 5 begrenzt wird.

Wenn zwei Fußbodenzuschnitte gemäß des Querschnitts der Figur 2 an ihren Längskanten 11, 12 aneinander angelegt werden, so kommen die jeweiligen Anlagewölbungen 22 zur gegenseitigen Anlage. Wenn ein Unterboden, auf den die Fußbodenzuschnitte 10 vorzugsweise in verklebter Weise aufliegen, uneben ist, was zu einem gewissen Winkel- und/oder Höhenversatz zwischen den nebeneinander angeordneten Fußbodenzuschnitten führt, kommt es aber immer noch zu einer gegenseitigen Anlage der Anlagewölbungen 22, bedingt durch den Hinterschnitt 26 und der Abrundung 21. Dadurch lassen sich ungewollte Spalte/Fugen zwischen den Fußbodenzuschnitten und somit ein ungleiches Erscheinungsbild mehrerer verlegter Fußbodenzuschnitte vermeiden. Wenn die Anlagewölbungen 22 aneinander anliegen, bilden die Fasen 21 - auch bei einem durch Unebenheiten des Unterbodens bedingten Versatz - eine im Wesentlichen V-förmige Nut mit in etwa jeweils gleicher Tiefe. Dies führt zu einem gefälligen Erscheinungsbild eines Fußbodenbelags, der sich aus einer Vielzahl von verlegten Fußbodenzuschnitten zusammensetzt.

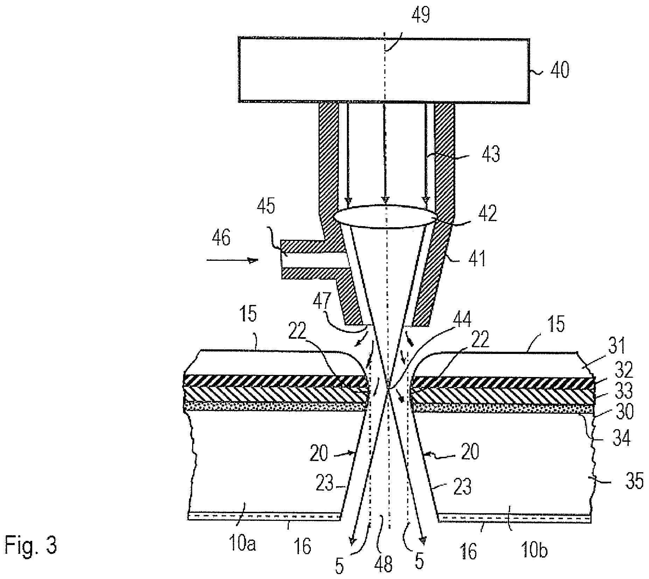

Figur 3 zeigt einen Laserschneidkopf 40 mit einer Schneiddüse 41. In der Schneiddüse 41 ist eine Linse 42 eingefasst, durch die parallel aus dem Laserschneidkopf 40 austretende Laserstrahlen 43 in einen Fokus oder Brennpunkt 44 gebündelt werden. Durch eine seitliche Öffnung 45 wird der Schneiddüse 41 ein Schneidgas 46 zugeführt, das durch eine Düsenaustrittsöffnung 47 aus der Schneiddüse 41 austritt. Als Schneidgas wird ein inertes Gas wie Stickstoff bevorzugt.

Figur 3 zeigt zudem zwei Fußbodenzuschnitte 10a, 10b, die durch den Laserschneidkopf 40 voneinander getrennt wurden. Bedingt durch den Schichtaufbau 30 umfassend die Nutzschicht 31 mit dem Polyurethan-Material, dem Schichtenverbund bestehend aus dem Dekorpapier 32, der Glasfasermatte 33 sowie dem Papierverfestiger 34 mit dem Flammschutzmittel sowie die Trägerschicht 35 aus einem hochgefüllten Polyurethan und bedingt durch eine vertikale Höhenjustierung der Schneiddüse 41 in Bezug auf die Fußbodenzuschnitte 10a, 10b ergibt sich ein mit 48 bezeichneter Schneidspalt mit einer Einschnürung in Höhe der Verstärkungsschicht 33. Zu erkennen ist, dass eine Längsachse 49 der Schneiddüse 41 senkrecht zur Nutzoberfläche 15 der Fußbodenzuschnitte 10a, 10b ausgerichtet ist, sodass sich eine zur Längsachse 49 spiegelsymmetrische Ausgestaltung des Schneidspalts 48 ergibt. Dies führt zu den spiegelsymmetrischen profilierten Konturen 20 der sich gegenüberstehenden Fußbodenzuschnitte 10a, 10b. Die Form des Schneidspalts 48 legt somit die profilierten Konturen 20 fest. Zu erkennen ist auch, dass die Schneiddüse 41 von oben die Fußbodenzuschnitte 10a, 10b trennt, dh. dass der Laserstrahl 43 zunächst auf die Nutzschicht 31 trifft.

In Figur 3 sind auch die Tangenten (siehe strichpunktierte Linie 5) dargestellt, die an die jeweilige Anlagewölbung 22 angelegt sind. Durch die Tangenten 5 soll verdeutlicht werden, wie sich der Schneidspalt 48 von einem schmalen rechteckigen Schneidspalt, der durch die Tangenten 5 begrenzt wird, abweicht. Gemäß vorliegender Erfindung wird nicht ein schmaler rechteckiger Schneidspalt angestrebt, wie dies gewöhnlich beim Laserschneiden das Ziel ist. Vielmehr wird ein deutlich davon abweichender, mit einer Einschnürung versehender Schneidspalt 48 angestrebt, um die gewünschten profilierten Kanten 20 der Fußbodenzuschnitte 10a, 10b zu erhalten.

In der schematischen Darstellung der Figur 3 fällt die vertikale Höhe des Brennpunkts 44 mit der vertikalen Höhe der gegenüberstehenden Auswölbungen 22 zusammen. Auch die umhüllenden Strahlen des Laserstrahls hinter dem Brennpunkt 44 sind als Parallelen zu den geneigten geradlinigen Konturabschnitten 23 eingezeichnet. Eine solche geometrische Konstellation ist jedoch nicht zwingend für das erfindungsgemäße Verfahren. So kann die vertikale Höhe des Brennpunktes von der vertikalen Höhe der Anlagewölbungen abweichen. Auch kann die Neigung der geradlinigen Konturabschnitte von dem Verlauf der umhüllenden Strahlen des Laserstrahls abweichen. Erfindungsgemäß ergibt sich eine in etwa viertelkreisförmige Abrundung, die nach unten durch die Dekorschicht 32 bzw. die Verstärkungsschicht 33 begrenzt wird.

### Bezugszeichenliste

- 10: Fußbodenzuschnitt
- 11: Längskanten
- 12: Längskanten
- 13: Querkante
- 14: Querkante
- 15: Nutzoberfläche
- 16: Unterseite/Rücken

- 20: Profilierte Kontur
- 21: Fase/Abrundung
- 22: Anlagewölbung
- 23: Konturabschnitt
- 24: Neigungswinkel
- 25: horizontale Ausdehnung
- 26: Hinterschnitt

- 30: Aufbau/Schichtaufbau
- 31: Nutzschicht
- 32: Dekorschicht
- 33: Verstärkungsschicht
- 34: Papierverfestiger
- 35: Trägerschicht
- 36: Polyestervlies

- 40: Laserschneidkopf
- 41: Schneiddüse
- 42: Linse
- 43: Laserstrahl
- 44: Fokus/Brennpunkt
- 45: Seitliche Öffnung
- 46: Schneidgas
- 47: Düsenaustrittsöffnung
- 48: Schneidspalt
- 49: Längsachse

## Patentansprüche

1. Fußbodenzuschnitt (10) mit einem mehrschichtigen Aufbau (30), der eine Nutzschicht (31) aus einem transparenten Kunststoff, eine Dekorschicht (32), eine Verstärkungsschicht (33) und eine Trägerschicht (35) aufweist, sowie mit wenigstens einer Kante (11, 12), die sich von einer Nutzoberfläche (15) bis zu einem Rücken (16) des Fußbodenzuschnitts erstreckt und an der eine profilierte Kontur (20) vorgesehen ist, die eine Abrundung oder Fase (21) im Bereich der Nutzoberfläche (31) aufweist und in einem unteren Bereich des Fußbodenzuschnitts einen Hinterschnitt (26) ausbildet, **dadurch gekennzeichnet, dass** die profilierte Kontur vollständig durch ein Laserwerkzeug mit einer Schneiddüse (41) hergestellt ist, deren Längsachse (49) bei der Herstellung der profilierten Kontur (20) senkrecht zu der Nutzoberfläche (15) ausgerichtet ist, wobei die Fase oder Abrundung (21) in eine konvex ausgebildete Anlagewölbung (22) übergeht, und wobei sich der Anlagewölbung (22) ein geneigter, im Wesentlichen geradliniger Konturabschnitt (23) anschließt, wobei der geradlinige Konturabschnitt (23) sich bis zu dem Rücken (16) des Fußbodenzuschnitts 10 erstreckt.

2. Verfahren zum Bereitstellen von Fußbodenzuschnitten (10) gemäß Anspruch 1 aus einer Fußbodenbahn, mit folgenden Schritten:
A Zuschneiden der Fußbodenbahn in mehrere Fußbodenzuschnitte (10), wobei an den Fußbodenzuschnitten (10) jeweils wenigstens die Kante (11, 12) entsteht;
B Herstellen der profilierten Kontur (20) an der Kante (11, 12), wobei die Kontur (20) an einem oberen Bereich der Kante die Fase oder Abrundung (21) aufweist und an dem unteren Bereich den Hinterschnitt (26) ausbildet,
wobei für das Zuschneiden der Fußbodenbahn das Laserwerkzeug verwendet wird, durch das beim Zuschneiden in einem Arbeitsgang die profilierte Kontur (20) hergestellt wird.

3. Verfahren nach Anspruch 2, **dadurch gekennzeichnet, dass** das Zuschneiden der Fußbodenbahn in die Fußbodenzuschnitte (10) durch einen bewegbaren Laserschneidkopf (40) erfolgt, der einer vorbestimmten Schnittlinie folgt.

4. Verfahren nach Anspruch 2 oder 3, **dadurch gekennzeichnet, dass** das Zuschneiden durch mehrere feststehende Laserschneidköpfe (40) des Laserwerkzeugs erfolgt.

5. Verfahren nach einem der Ansprüche 2 bis 4, **dadurch gekennzeichnet, dass** die Fußbodenbahn eine Endlosbahn ist.

6. Verfahren nach Anspruch 2, **dadurch gekennzeichnet, dass** die Fußbodenbahn (10) mehrschichtig aufgebaut ist und zu dessen Herstellung auf eine Releaseschicht Polyurethan zur Bildung der transparenten Nutzschicht (31), zur Bildung der Dekorschicht (32) ein Dekorbogen und zur Bildung der Verstärkungsschicht (33) ein Verstärkungsmaterial aufgetragen werden.

7. Verfahren nach Anspruch 6, **dadurch gekennzeichnet, dass** zur Bildung der Trägerschicht (35) Polyurethan mit einem Füllstoff aufgetragen wird.

8. Verfahren nach Anspruch 6 oder 7, **dadurch gekennzeichnet, dass** das Verstärkungsmaterial eine Glasfasermatte umfasst.

9. Verfahren nach einem der Ansprüche 6 bis 8, **dadurch gekennzeichnet, dass** auf einer Rückseite des Dekorbogens ein flüssiger Papierverfestiger (34) aufgetragen wird.

10. Verfahren nach Anspruch 9, **dadurch gekennzeichnet, dass** der Papierverfestiger ein Flammschutzmittel mit einem mineralischen Anteil umfasst.

11. Verfahren nach Anspruch 9- oder 10, **dadurch gekennzeichnet, dass** vor dem Auftragen des Papierverfestiger (34) auf die Rückseite des Dekorbogens das Verstärkungsmaterial aufgebracht wird.

## Claims

1. Flooring blank (10) with a multi-layer structure (30), which has a wear layer (31) made from a transparent plastic, a decorative layer (32), a reinforcing layer (33) and a support layer (35), as well as with at least one edge (11, 12), which extends from a usable surface (15) to a back (16) of the flooring blank and on which a profiled contour (20) is provided, which has a rounding or chamfer (21) in the region of the usable surface (31) and forms an undercut (26) in a lower region of the flooring blank, **characterised in that** the profiled contour is produced entirely by a laser tool with a cutting nozzle (41), the longitudinal axis (49) of which when producing the profiled contour (20) is oriented perpendicular to the usable surface (15), wherein the chamfer or rounding (21) merges into a convex curve structure (22), and wherein the curve structure (22) adjoins an inclined, substantially straight, contour section (23), wherein the straight contour section (23) extends to the back (16) of the flooring blank (10).

2. Method for providing flooring blanks (10) according to claim 1 from a flooring sheet, comprising the following steps:
A Cutting the flooring sheet into multiple flooring blanks (10), wherein, in each case, at least the edge (11, 12) is produced on the flooring blanks (10),
B Producing the profiled contour (20) on the edge (11, 12), wherein the contour (20) has the chamfer or rounding (21) in an upper region and forms the undercut (26) in the lower region,
wherein the laser tool is used for cutting the flooring sheet, by means of which the profiled contour (20) is produced when cutting in one operation.

3. Method according to claim 2, **characterised in that** cutting the flooring sheet into the flooring blanks (10) is performed by a movable laser cutting head (40), which follows a predetermined cutting line.

4. Method according to claim 2 or 3, **characterised in that** cutting is performed by multiple fixed laser cutting heads (40) of the laser tool.

5. Method according to one of claims 2 to 4, **characterised in that** the flooring sheet is a continuous web.

6. Method according to claim 2, **characterised in that** the flooring sheet (10) has a multi-layer structure and for the production of which polyurethane is applied to a release layer to form the transparent wear layer (31), a decorative sheet is applied to form the decorative layer (32) and a reinforcing material is applied to form the reinforcing layer (33).

7. Method according to claim 6, **characterised in that** polyurethane with a filler is applied to form the support layer (35).

8. Method according to claim 6 or 7, **characterised in that** the reinforcing material comprises a glass fibre mat.

9. Method according to one of claims 6 to 8, **characterised in that** a liquid paper solidifier (34) is applied to the back of the decorative sheet.

10. Method according to claim 9, **characterised in that** the paper solidifier comprises a flame retardant with a mineral content.

11. Method according to claim 9 or 10, **characterised in that** the reinforcing material is applied before applying the paper solidifier (34) to the back of the decorative sheet.

## Revendications

1. Découpe de plancher (10) avec une structure (30) multicouche qui présente une couche utile (31) en une matière plastique transparente, une couche décorative (32), une couche de renforcement (33) et une couche porteuse (35), ainsi qu'avec au moins une arête (11, 12) qui s'étend d'une surface utile (15) jusqu'à un dos (16) de la découpe de plancher et au niveau de laquelle un contour profilé (20) est prévu, lequel présente un arrondi ou un chanfrein (21) dans la zone de la surface utile (31) et réalise dans une zone innférieure de la découpe de plancher une contre-dépouille (26), **caractérisée en ce que** le contour profilé est complètement fabriqué par un outil laser avec une douille de coupe (41), dont l'axe longitudinal (49) est orienté lors de la fabrication du contour profilé (20) perpendiculairement à la surface utile (15), dans laquelle le chanfrein ou l'arrondi (21) passe en une courbure d'appui (22) réalisée de manière convexe, et dans laquelle à la courbure d'appui (22) se raccorde une section de contour (23) inclinée sensiblement en ligne droite, dans laquelle la section de contour (23) en ligne droite s'étend jusqu'au dos (16) de la découpe de plancher (10).

2. Procédé de fourniture de découpes de plancher (10) selon la revendication 1 à partir d'une bande de plancher, avec les étapes suivantes :
A coupe de la bande de plancher en plusieurs découpes de plancher (10), dans lequel respectivement au moins l'arête (11, 12) apparaît au niveau des découpes de plancher (10) ;
B fabrication du contour profilé (20) au niveau de l'arête (11, 12), dans lequel le contour (20) présente le chanfrein ou l'arrondi (21) au niveau d'une zone supérieure de l'arête et réalise la contre-dépouille (26) au niveau de la zone inférieure,
dans lequel l'outil laser est utilisé pour la coupe de la bande de plancher, par lequel le contour (20) profilé est fabriqué lors de la coupe dans un cycle de travail.

3. Procédé selon la revendication 2, **caractérisé en ce que** la coupe de la bande de plancher en découpes de plancher (10) est effectuée par une tête de coupe laser (40) mobile qui suit une ligne de coupe prédéterminée.

4. Procédé selon la revendication 2 ou 3, **caractérisé en ce que** la découpe est effectuée par plusieurs têtes de coupe laser (40) fixes de l'outil laser.

5. Procédé selon l'une quelconque des revendications 2 à 4, **caractérisé en ce que** la bande de plancher est une bande sans fin.

6. Procédé selon la revendication 2, **caractérisé en ce que** la bande de plancher (10) est constituée en plusieurs couches et pour sa fabrication sur une couche de libération, du polyuréthane est appliqué pour la formation de la couche utile (31) transparente, pour la formation de la couche décorative (32) une feuille décorative et pour la formation de la couche de renforcement (33) un matériau de renforcement.

7. Procédé selon la revendication 6, **caractérisé en ce que** pour la formation de la couche porteuse (35), du polyuréthane est appliqué avec une substance de remplissage.

8. Procédé selon la revendication 6 ou 7, **caractérisé en ce que** le matériau de renforcement comporte un tapis de fibre de verre.

9. Procédé selon l'une quelconque des revendications 6 à 8, **caractérisé en ce qu'**un agent de consolidation de papier (34) liquide est appliqué sur un côté arrière de la feuille décorative.

10. Procédé selon la revendication 9, **caractérisé en ce que** l'agent de consolidation de papier comporte un agent ignifuge avec une part minérale.

11. Procédé selon la revendication 9 ou 10, **caractérisé en ce qu'**avant l'application de l'agent de consolidation de papier (34) sur le côté arrière de la feuille décorative, le matériau de renforcement est appliqué.
